# EUROPÄISCHE PATENTSCHRIFT

(11) **EP 2 600 172 B1**
(45) Veröffentlichungstag und Bekanntmachung des Hinweises auf die Patenterteilung: **02.09.2015**
(21) Anmeldenummer: 12007932.2
(22) Anmeldetag: 24.11.2012
(51) Int. Cl.: G01S 13/87, G01S 13/26, G01S 13/32, G01S 13/58, G01S 13/30

(54) **Radarvorrichtung**
Radar device
Dispositif de radar

(30) Priorität: 02.12.2011 DE 102011120089
(43) Veröffentlichungstag der Anmeldung: 05.06.2013
(73) Patentinhaber: Diehl BGT Defence GmbH & Co. KG, 88662 Überlingen (DE)
(72) Erfinder: Regensburger, Martin, 92318 Neumarkt (DE); Stanko, Stephan, Dr., 56651 Niederzissen (DE); Schlüter, Klaus, Dr., 90542 Eckental (DE); Sommer, Rainer, 53501 Grafschaft (DE); Wahlen, Alfred, 53340 Meckenheim (DE)
(74) Vertreter: Diehl Patentabteilung

(56) Entgegenhaltungen:
- EP-A1- 1 314 997
- EP-A2- 2 009 463
- US-A- 4 920 347
- US-A1- 2008 122 680
- US-B1- 8 098 191

## Beschreibung

Die Erfindung betrifft eine Radarvorrichtung, umfassend ein Sendemodul, wenigstens ein Empfangsmodul sowie eine dem Empfangsmodul nachgeschaltete Auswerteelektronik.

Aus der US 4 920 347 A ist ein Puls-Doppler-Radarsystem zum Messen einer Zielentfernung bekannt. Dabei sendet das Radarsystem abwechselnd ein Signal mit konstanter Frequenz und ein mit einer sich linear verändernden Frequenz moduliertes Signal.

Aus der EP 2 009 463 A2 ist eine Sicherheitsvorrichtung für ein automatisches Selbstschutzsystem bekannt. Dabei ist zwischen einer Radar-Empfangseinrichtung und einer Zünd- und Sicherheitseinrichtung eine Radar-Dopplersignale auswertende Sicherheitsschaltung zu diesem parallel geschaltet, wobei der Ausgang der Sicherheitsschaltung und der Ausgang des abstandswirksamen Schutzsystems mit den Eingängen einer UND-Verknüpfung zusammengeschaltet sind, deren Ausgang an die Zünd- und Sicherungseinrichtung angeschlossen ist.

Militärische geschützte Fahrzeuge verfügen über keine starke Panzerung, die Angriffen mit Flugkörpern, Granaten oder anderer, primär der Panzerabwehr dienender Munition standhält. Zu diesem Zweck ist es bekannt, solche Fahrzeuge mit einem aktiven Schutzsystem auszurüsten, das einerseits die Erkennung einer solchen anfliegenden Bedrohung ermöglicht, zum anderen über eine mitgeführte Feuerleiteinrichtung auch die selbständige Abwehr durch Abfeuern einer Gegenmaßnahme, üblicherweise in Form eines entgegengefeuerten Effektors, ermöglicht. Das Schutzsystem muss vollständig autonom arbeiten, also ohne Einflussmöglichkeit durch den Bediener, da die notwendigen Reaktionszeiten sehr klein sind.

Zur Erfassung einer anfliegenden Granate oder dergleichen, also einer Bedrohungslage, wird eine Radarvorrichtung vorgesehen, die in der Lage ist, das Ziel zu erfassen und Eingangsparameter zu liefern, die die Zielvermessung ermöglichen bzw. an die Feuerleiteinrichtung gegeben werden können, die daraufhin die Flugbahn und den Kollisionszeitpunkt des eigenen, abzuschießenden Effektors mit der anfliegenden Bedrohung errechnet, den eigenen Granatwerfer ausrichtet und den Abschuss des Effektors auslöst oder eine stationäre, gerichtete Gegenmaßnahme oder eine Wirkbox auslöst.

Ein solches aktives Schutzsystem, das selbsttätig eine Gegenmaßnahme auslöst, setzt jedoch einen hohen Sicherheitsstandard voraus, das heißt, dass eine hohe Systemsicherheit dahingehend gegeben sein muss, dass auch tatsächlich eine Bedrohungslage gegeben ist, mithin also eine anfliegende Granate sicher detektiert wurde. Denn einerseits ist das Abfeuern der eigenen Granate zumindest im näheren Umkreis mit Gefahren verbunden, wie andererseits aber auch die spätere Explosion zur Bekämpfung der Bedrohung.

Der Erfindung liegt damit die Aufgabe zugrunde, eine besonders effizient arbeitende Radarvorrichtung anzugeben, die ein hohes Maß an Detektionssicherheit bietet, so dass die geforderte Systemsicherheit bei Integration einer solchen Radarvorrichtung in ein solches aktives Schutzsystem gewährleistet ist.

Diese Aufgabe wird durch die Radarvorrichtung gemäß Anspruch 1 gelöst. Vorteilhafte Ausgestaltungen der Erfindung sind in den abhängigen Ansprüchen 2 bis 9 angegeben.

Die erfindungsgemäße Radarvorrichtung weist in an sich bekannter Weise die übliche Sende- und Empfangs-Hardware auf, nämlich ein Sendemodul, welches vorzugsweise eine Sendeantenne umfasst, die zum Aussenden der Radarpulse dient, wie auch ein Empfangsmodul, welches vorzugsweise wenigstens eine Empfangsantenne umfasst, die in bekannter Weise die reflektierten Empfangssignale aufnimmt. Das Sendemodul mit seiner integrierten, den Sendebetrieb steuernden Elektronik ist nun erfindungsgemäß derart ausgelegt, dass über es in einer vorbestimmten Sendeabfolge sowohl Chirp-Pulse als auch Festfrequenz-Pulse abgebbar sind. Ein Chirp-Puls ist ein Radarpuls respektive ein Radarsignal, dessen Frequenz sich über die Sendedauer ändert, während bei einem Festfrequenz-Puls die Frequenz über die Sendedauer konstant bleibt. Beide Pulsarten werden mit ein und derselben Sende-Hardware, also dem einen Sendemodul gesendet, das heißt, dass mithin die Radarvorrichtung, quasi bifunktional, in zwei unterschiedlichen Betriebsmodi arbeiten kann. Anhand der unterschiedlichen Pulse können unterschiedliche Informationen ermittelt werden, worauf nachfolgend noch eingegangen wird.

Über das Empfangsmodul werden nun die unterschiedlichen, den jeweiligen unterschiedlichen Pulstypen zuordbaren Empfangssignale aufgenommen. Da die Radarvorrichtung zur Erfassung etwaiger Ziele im Bereich mehrerer 100 Meter Entfernung ausgelegt ist, sind die jeweiligen Zeitfenster, innerhalb welcher die einem bestimmten Sendepuls zuzuordnenden Empfangssignale zu erwarten sind, sehr kurz. Das heißt, dass ein Empfangssignal in kürzester Zeit nach Abgabe des Sendepulses aufgenommen wird, mithin also eine eindeutige Zuordnung wie auch ein entsprechend hochfrequenter Sende- und Empfangsbetrieb möglich ist. Das eine Empfangsmodul ist also in der Lage, die wiederum unterschiedlichen, vom Sendepulstyp abhängigen Empfangssignale zu erfassen.

Diese Empfangssignale werden nun in unterschiedlichen, typenspezifischen Auswerteelektroniken separat verarbeitet. Das heißt, dass erfindungsgemäß die Signalverarbeitungselektronik quasi zweiteilig ist. Sie umfasst eine erste Auswerteelektronik, die allein der Auswertung der auf einem Chirp-Puls hin erfassten Empfangssignale dient und aus diesem Chirp-Empfangssignal die relevanten Auswertesignale mit den entsprechenden Informationsgehalten erzeugt. Die zweite typenspezifische Auswerteelektronik ist zum Verarbeiten der auf einem Festfrequenz-Puls hin erfassten Empfangssignale ausgelegt, auch sie ermittelt ein Auswertesignal mit einem signalspezifischen Informationsinhalt.

Das heißt, dass nach Gabe eines Chirp-Pulses und eines Festfrequenz-Pulses zwei separat ausgewertete Auswertesignale vorliegen, die vom Informationsgehalt her zumindest teilweise vergleichbar sind, mithin also zumindest teilweise redundante Informationen enthalten, wenn ein entgegen fliegendes Geschoss erfasst wird.

Aus dem Chirp-Puls-Empfangssignal werden wie beschrieben die wesentlichen Radarinformationen ermittelt, die der Zieldetektion wie auch zur Vermessung des Ziels und als Eingangsparameter für die nachgeschaltete Feuerleitung dienen. Das Auswertesignal erhält Informationen sowohl über die Geschwindigkeit des anfliegenden Objekts wie auch die Entfernung und - insbesondere wenn mehrere Empfangsantennen am Empfangsmodul vorgesehen sind - auch etwaige Informationen über den Azimut- und den Orbitalwinkel.

Aus dem Festfrequenz-Puls-Empfangssignal, von dem, da es eine feste Frequenz aufweist, hauptsächlich die Dopplerfrequenz ausgewertet werden kann, ergibt sich als Information zumindest die Geschwindigkeit einer etwaigen sich nähernden Bedrohung.

Das heißt, dass innerhalb der beiden pulsspezifischen Auswertesignale zumindest eine redundante Information enthalten ist, nämlich beispielsweise die Geschwindigkeit eines sich nähernden Objekts.

Diese übereinstimmende, also vergleichbare Information kann nun dazu dienen, eine sicherheitstechnische Verifizierung des Erfassungsergebnisses durchzuführen. Wie beschrieben dient das aus dem Chirp-Puls-Empfangssignal ermittelte Auswertesignal als Haupt-Radarinformation. Das zweite, aus dem Festfrequenz-Puls-Empfangssignal ermittelte Auswertesignal kann beispielsweise als redundantes Signal der Verifizierung des Chirp-Puls-Auswertesignals dienen. Es kann folglich durch einen entsprechenden Vergleich überprüft werden, ob die im Chirp-Puls-Auswertesignal ermittelte Geschwindigkeitsinformation eines etwaigen detektierten Geschosses auch im aus dem Festfrequenz-Puls-Auswertesignal enthalten ist. Ergibt sich eine Übereinstimmung, werden also in beiden Auswertesignalen entsprechende Geschwindigkeitsinformationen, die auch vom Informationsgehalt her, also der Absolutgeschwindigkeit, einander im Wesentlichen entsprechen, erfasst, so kann hierin eine Bestätigung der Haupt-Radarinformation gesehen werden, mithin also eine Verifizierung einer korrekten Zielerfassung über den Chirp-Puls.

Allgemeiner betrachtet, führt die Chirp-Puls-Auswerteeinheit außer der Vermessung des Ziels eine sicherheitstechnische Bewertung der Empfangsdaten durch. Die Empfangsdaten werden bezüglich typischer Kenndaten einer Bedrohung überprüft. Zur Überprüfung der typischen Bedrohungsdaten können z. B. Geschwindigkeit und/oder Radarrückstreuquerschnitt verwendet werden. Während die Zieldetektion und Vermessung (Hauptfunktion des Radars) eine sehr kurze Verarbeitungszeit erfordert, kann zur sicherheitstechnischen Verifikation der Bedrohung ein größerer Zeitraum betrachtet werden, um die Fehlerrate weiter zu verringern.

Von der Festfrequenz-Puls-Auswertung wird eine zweite unabhängige Verifikation der Bedrohung durchgeführt. Werden also in beiden Auswerteeinheiten entsprechende Bedrohungsmerkmale erkannt, so wird von beiden Auswerteeinheiten die Bekämpfung der Bedrohung freigegeben und die Bedrohung kann bekämpft werden. Sollte eine der Auswerteeinheiten keine ausreichenden Bedrohungsmerkmale erkennen, wird die Bekämpfung des erfassten Objekts nicht freigegeben.

Gestützt auf diese Verifizierung kann nun mit sehr hoher Sicherheit davon ausgegangen werden, dass tatsächlich eine Bedrohungslage gegeben ist, woraufhin letztlich die Freigabe für die Gegenmaßnahme erfolgen kann. Die Radarvorrichtung liefert folglich sicherheitstechnisch hochrelevante Informationen, die es ermöglichen, mit hohem Sicherheitsmaß eine tatsächliche Bedrohungslage erfassen und darauf gestützt ein automatisches System zur Gegenabwehr betreiben zu können.

Dabei kann die Verifizierung der jeweiligen Auswertesignale, letztlich also der Vergleich der Auswertesignale, seitens der Radarvorrichtung selbst erfolgen. In diesem Fall werden die von der die Festfrequenz-Puls-Empfangssignale verarbeitenden Auswerteelektronik erzeugten Auswertesignale an die andere Auswerteelektronik, die die Chirp-Auswertesignale erzeugt, zu Vergleichszwecken gegeben. Das heißt, dass die Radarvorrichtung letztlich am Signalausgang zur Feuerleitung, neben den Eingangsparametern respektive den Zielvermessungsparametern, auch ein Schussfreigabesignal erzeugt. Alternativ dazu ist es aber auch denkbar, die ermittelten Auswertesignale als solche an die nachgeschaltete Feuerleitung zu geben, die dann den eigentlichen Signalvergleich vornimmt, mithin also die Verifizierung und damit selbsttätig entscheidet, ob ausreichend Sicherheit für eine Gegenmaßnahme gegeben ist oder nicht.

Wie bereits beschrieben, wird zweckmäßigerweise als vom Informationsinhalt her vergleichbares Auswertesignal jeweils ein Geschwindigkeitsinformationssignal respektive eine Geschwindigkeitsinformation ermittelt. Ganz grundsätzlich sind natürlich sämtliche eingebundenen Module respektive Elektroniken insoweit synchronisiert, als sich alle ermittelten Signale respektive Informationsdaten auf ein Synchronisationssignal beziehen.

Die Auswertesignale respektive Radarmesswerte sind mit einem Zeitstempel (Messzeitpunkt) versehen. Dieser Zeitstempel definiert den Messzeitpunkt, also den Zeitpunkt, zu dem der Chirp-Puls oder der Festfrequenz-Puls gesendet werden. Die Pulse werden mit einer festen Wiederholfrequenz betrieben. Insbesondere sollte die feste Chirp-Wiederholfrequenz von der Taktfrequenz der zugeordneten Auswerteelektronik, die bevorzugt über FPGA's realisiert wird, abgeleitet werden, um eine hohe Frequenzstabilität zu erreichen.

In Weiterbildung der Erfindung ist vorgesehen, dass seitens der separaten Auswerteelektroniken zusätzlich den eigenen Funktionsstatus anzeigende Statussignale erzeugt werden können. Diese Statussignale zeigen letztlich lediglich an, ob die jeweilige Auswerteelektronik funktionsbereit ist und kein Fehler gegeben ist. Sobald ein Fehler erfasst wird, wird ein solches Statussignal entweder nicht gegeben, oder es wird ein Fehlersignal als Statussignal ausgegeben. Dieses Statussignal kann, wenn die Signalauswertung respektive der Signalvergleich seitens der Radarvorrichtung erfolgt, von der die Festfrequenz-Puls-Empfangssignale verarbeitenden Auswerteelektronik an die die Chirp-Puls-Empfangssignale verarbeitenden Auswerteelektronik gegeben werden, die sodann sämtliche Signale respektive Daten vergleicht. Dort erfolgt dann also sowohl der Vergleich der eigentlichen Auswertedaten, als auch die Überprüfung, ob beide Auswerteelektroniken anhand der Statussignale als funktionsbereit gekennzeichnet sind.

Wie beschrieben werden die Chirp-Pulse und die Festfrequenz-Pulse in einem vorbestimmten Sendemuster gegeben. Dabei wäre es prinzipiell möglich, dass sie abwechselnd gegeben werden, das heißt, dass eine kontinuierliche alternierende Pulsfolge gegeben ist, mithin also auf einen Chirp-Puls immer ein Festfrequenz-Puls folgt. Dabei könnte mit Inbetriebnahme der Radarvorrichtung grundsätzlich diese Sendeabfolge gegeben sein, also unabhängig davon, ob nun über die Chirp-Pulse tatsächlich ein anfliegendes Ziel erfasst wird oder nicht. Alternativ zur abwechselnden Gabe der verschiedenen Pulse wäre es natürlichprinzipiell auch denkbar, andere Sendemuster zu wählen. Beispielsweise könnten zwei, drei oder mehr Chirp-Pulse nacheinander gegeben werden, bevor ein erster Festfrequenz-Puls gegeben wird. Dies wäre dahingehend zweckmäßig, als über die Chirp-Puls-Empfangssignale ja die wesentlichen Zielinformationen ermittelt werden, die zu überprüfen sind, um etwaige Änderungen der Feuerleitung mitzuteilen.

Erfindungsgemäß wird aber die Gabe der Festfrequenz-Pulse in Abhängigkeit der zunächst gegebenen Chirp-Pulse vorgenommen. Insbesondere wird die Gabe der Festfrequenz-Pulse nur dann vorgenommen, wenn letztlich durch Auswertung der Chirp-Puls-Empfangssignale erstmals ein mögliches Ziel erfasst wird. Nur dann ist letztlich eine Verifizierung der eigentlichen Haupt-Radarinformationen, abgeleitet aus den Chirp-Puls-Empfangssignalen, erforderlich.

In Weiterbildung der Erfindung sind zweckmäßigerweise die beiden separaten Auswerteelektroniken zumindest teilweise aus in der Art und/oder im Typ und/oder der Arbeitsweise unterschiedlichen Elektronikkomponenten aufgebaut. Bevorzugt umfassen die separaten Auswerteelektroniken FPGA's. Der Vorteil der unterschiedlichen Konfiguration der beiden separaten Auswerteelektroniken liegt darin, Hardware-Fehler zu vermeiden, mithin also zu vermeiden, dass ein komponentenimmanenter Fehler in beiden Elektroniken auftreten kann, so dass die Auswerteergebnisse gegebenenfalls fehlerhaft sind. Dies wird dadurch vermieden, dass eben unterschiedliche Elektronikkomponenten verwendet werden. Bevorzugt werden FPGA's eingesetzt, die einerseits mit einer entsprechend hohen Taktfrequenz arbeiten, zum anderen auch einfach mit der entsprechenden Auswertesoftware programmiert werden können. In den beiden Auswerteelektroniken können also beispielsweise unterschiedliche FPGA-Typen verwendet werden, auch können unterschiedliche Auswertealgorithmen verwendet werden, so dass sich unterschiedliche Arbeitsweisen ergeben, wie auch natürlich verschiedene Prozessorarten verwendet werden können.

Wie bereits beschrieben, sind zweckmäßigerweise mehrere, insbesondere vier Empfangsmodule zur Lieferung von simultanen, jedoch separaten Empfangssignalen, die simultan von der jeweiligen Auswerteelektronik verarbeitbar sind, vorgesehen. Bevorzugt sind vier Empfangsmodule, also vier Empfangsantennen vorgesehen, die beispielsweise in einer Viereckform angeordnet sind. Aufgrund des positionsmäßigen Versatzes ist es möglich, aus den simultan empfangenen, separaten Empfangssignalen nach vorangegangenem Chirp-Puls entsprechende Winkelinformationen aus den jeweiligen Laufzeitdifferenzen der vier unterschiedlichen Empfangsantennen zu ermitteln, um hieraus die Azimut- und Orbitalwinkelinformationen seitens der Chirp-Auswerteelektronik zu ermitteln.

Unter Verwendung einer Radarvorrichtung der vorstehend beschriebenen Art kann ein Verfahren zur Erfassung eines Objekts realisiert werden, welches sich dadurch auszeichnet, dass anhand des von der die Festfrequenz-Puls-Empfangssignale auswertenden Auswerteelektronik erzeugten Auswertesignals eine Verifizierung des zumindest teilweise vom Informationsgehalt vergleichbaren, jedoch seitens der die Chirp-Puls-Empfangssignale verarbeitenden Auswerteelektronik erzeugten Auswertesignals erfolgt, und in Abhängigkeit des Vergleichsergebnisses ein einen objektbezogenen Vorgang freigebendes Signal erzeugt wird.

Gemäß dem Verfahren wird also anhand des Festfrequenz-Puls-Auswertesignals eine Verifizierung des Chirp-Puls-Auswertesignals hinsichtlich einer Zielinformation vorgenommen, wobei gestützt auf dieses Vergleichsergebnis sodann ein einen objektbezogenen Vorgang freigebendes Signal, beispielsweise ein Freigabesignal für einen Gegenschuss, erzeugt wird.

Weitere Vorteile, Merkmale und Einzelheiten der Erfindung ergeben sich aus dem im Folgenden beschriebenen Beispiel sowie anhand der Zeichnungen. Dabei zeigen:
- Fig. 1: eine Prinzipdarstellung eines aktiven Schutzsystems, umfassend eine erfindungsgemäße Radarvorrichtung, und
- Fig. 2: eine Prinzipdarstellung einer erfindungsgemäßen Radarvorrichtung.

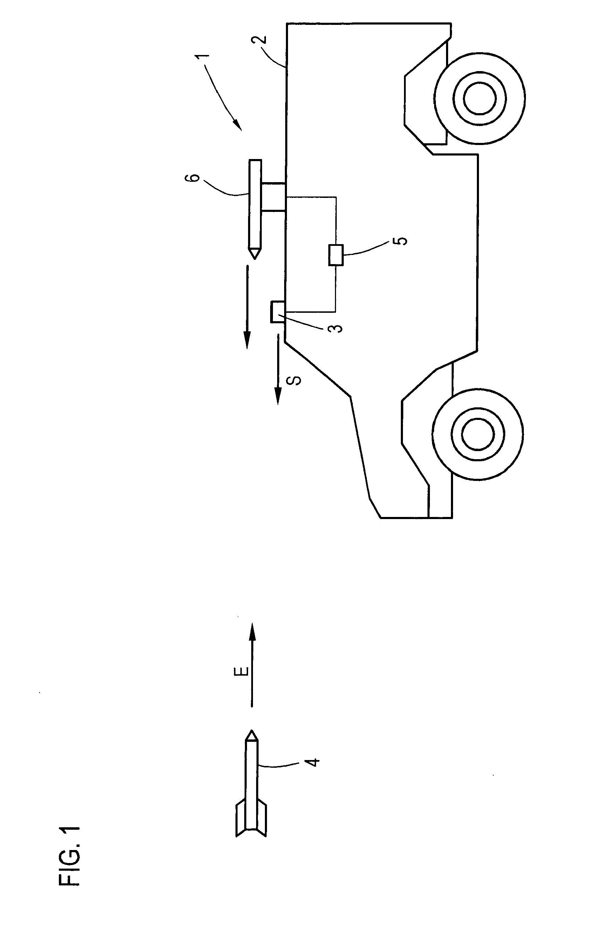

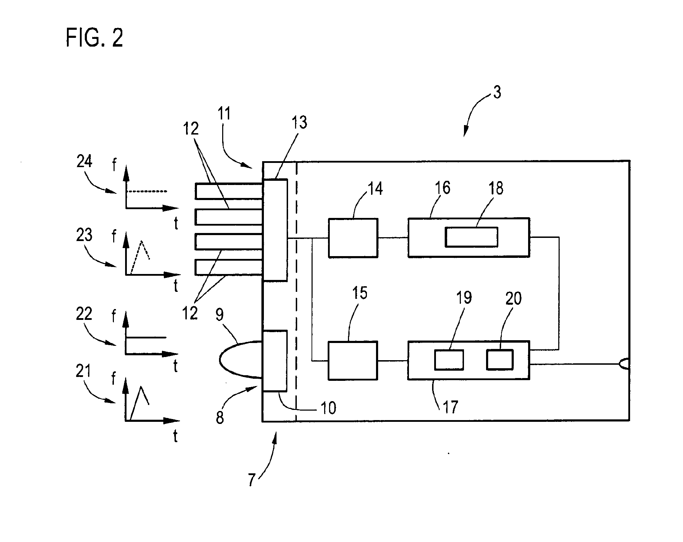

Fig. 1 zeigt in Form einer Prinzipdarstellung ein aktives Schutzsystem 1, das an einem Fahrzeug 2 vorgesehen ist. Das Schutzsystem umfasst zum einen eine Radarvorrichtung 3, über die ein etwaiges, sich schnell näherndes Ziel, im gezeigten Beispiel eine Granate 4, erfasst und diesbezüglich entsprechende Mess- und Zielinformationen ermittelt werden können. Dies geschieht durch Aussenden eines Sendesignals S, das von der Granate 4 reflektiert wird und als Empfangssignal E wiederum von der Radarvorrichtung 3 erfasst werden kann. Dieses Empfangssignal wird ausgewertet, wobei hierauf nachfolgend im Detail bezüglich Fig. 2 eingegangen wird. Stehen sämtliche Zielparameter fest, so werden diese als Eingangsparameter an eine Feuerleiteinrichtung 5 gegeben, die daraufhin, wenn sichergestellt ist, dass eine Bedrohungslage gegeben ist, eine zugeordnete Waffe 6 ansteuert, um einen Gegenschuss auszulösen, dergestalt, dass das abgefeuerte Geschoss die anfliegende Zielgranate zerstört und mithin das Fahrzeug 2 vor einem Treffer schützt.

Wesentliche Komponente in einem solchen Schutzsystem 1 ist die Radarvorrichtung 3, die in Form einer Prinzipdarstellung in Fig. 2 näher gezeigt ist. Die Radarvorrichtung 3 umfasst ein austauschbares Frontend 7, an dem die den Sende- und Empfangsbetrieb dienenden Hardware-Komponenten vorgesehen sind. Vorgeschaltet ist dem Frontend 7 ein Radom sowie eine entsprechende ballistische Schutzabdeckung, die hier nicht näher gezeigt sind.

Das Frontend 7 umfasst zum einen ein Sendemodul 8 mit einer Sendeantenne 9 und zugeordneter Signalerzeugungseinrichtung 10. Über die Sendesteuereinrichtung 10 ist es ferner möglich, die Mittenfrequenz des gesendeten Chirp-Signals anzupassen respektive zu verändern. Dies kann erforderlich sein, wenn zur Sicherstellung eines möglichst großen Erfassungsbereichs mehrere erfindungsgemäße Radarvorrichtungen fahrzeugseitig vorgesehen werden, die allesamt gleich und gleichzeitig arbeiten. Durch die Frequenzänderung ist es möglich, jede Radarvorrichtung mit einer eigenen Chirp-Mittenfrequenz zu betreiben, so dass die entsprechenden Empfangssignale eindeutig einer Radarvorrichtung zuzuordnen sind. Die Steuerung kann beispielsweise über den Feuerleitrechner erfolgen.

Vorgesehen sind ferner mehrere Empfangsmodule 11, im gezeigten Beispiel vier einzelne Empfangsantennen 12, die üblicherweise in einer vier- oder rechteckigen Anordnung angeordnet sind, mithin also versetzt zueinander, um aufgrund der lokal unterschiedlichen Position aus den Empfangssignalen entsprechende Winkelinformationen ermitteln zu können, worauf nachfolgend noch eingegangen wird. Den Empfangsantennen 12 zugeordnet ist eine entsprechende Empfängerelektronik 13, die entsprechend vierkanalig ausgelegt ist. Mithin sind im Frontend 7 sämtliche Hochfrequenz-Komponenten von der Frequenzerzeugung bis hin zum Hochfrequenzmischer vorgesehen. Der Aufbau eines solchen Frontends ist bekannt und muss nicht näher beschrieben werden.

Dem Frontend 7 nachgeschaltet ist die weitere Radarelektronik. Diese beinhaltet sowohl die für die Zieldetektion und Verfolgung notwendige Elektronik, als auch eine Elektronik zur redundanten und unabhängigen Überprüfung der Empfangsdaten zur Verbesserung der Systemsicherheit, mithin also zur Verifizierung einer Zielerfassung. Die vier vom Frontend gelieferten analogen Empfangssignale werden mittels eines oder mehrerer Analog-Digital-Wandler digitalisiert und in jeweilige separate Auswerteelektroniken, die bestimmten Sendepulstypen zugeordnet sind, worauf nachfolgend noch eingegangen wird, eingelesen. In diesen jeweiligen Auswerteelektroniken werden die Empfangssignale zur Bestimmung der Zielbewegung ausgewertet. Grundsätzlich erfolgt über die Radarelektronik, wenngleich die entsprechenden Bauteile auch nicht im Detail gezeigt sind, die Basisbandmischung, eine Fast-Fourier-Transformation der Signale, die Auswertung der Empfangssignale, die Kommunikation mit dem Feuerleitrechner sowie die Steuerung des Frontends.

Im gezeigten Ausführungsbeispiel sind lediglich die wesentlichen Komponenten gezeigt, nämlich zum einen zwei Analog-Digital-Wandler 14, 15, die jeweils zwei separaten Auswerteelektroniken 16, 17 vorgeschaltet sind, in denen die Auswertung der jeweiligen, ihnen zugeführten Empfangssignale vorgenommen wird. Hierzu sind entsprechende FPGA's 18, 19 vorgesehen, die die Signalauswertung und Informationsermittlung durchführen, wie die zweite Auswerteelektronik 17 zusätzlich noch eine Vergleichs- oder Verifizierungseinrichtung 20 aufweist, um eine Informationsverifizierung durchzuführen, worauf nachfolgend noch eingegangen wird.

Ein wesentliches Kennzeichen der erfindungsgemäßen Radarvorrichtung 3 ist, dass sie bimodal betrieben werden kann. Dies wird dadurch ermöglicht, dass das Sendemodul in der Lage ist, sowohl einen Chirp-Puls mit sich verändernder Frequenz abzugeben, als auch einen Festfrequenz-Puls. Dies wird über die entsprechende Signalerzeugungseinrichtung 10 gemäß einer vorbestimmten Pulsabfolge angesteuert. Diese Folge sieht beispielsweise vor, einen Chirp-Puls und einen Festfrequenz-Puls jeweils abwechselnd zu geben. Exemplarisch ist ein Chirp-Puls 21 mit sich verändernder Frequenz und ein Festfrequenz-Puls 22 mit konstanter Frequenz dargestellt.

Wie bereits bezüglich Fig. 1 beschrieben werden die jeweils gegebenen Pulse 21, 22 vom möglichen Ziel reflektiert und als pulsspezifische Empfangssignale über die Empfängerantennen 12 empfangen. Exemplarisch dargestellt sind ein erstes Chirp-Empfangssignal 23 sowie ein Festfrequenz-Empfangssignal 24.

Aufgrund der Reflexion der Sendesignale durch das Ziel sind die Empfangssignale 23, 24 gegenüber den Sendesignalen 21, 22 verändert, wobei diese Veränderung die relevanten, auszuwertenden Informationen beinhaltet. Das Chirp-Empfangssignal ist quasi zweifach verändert, hier sind zwei Effekte überlagert. Zum einen ändert sich aufgrund des Doppler-Effekts die Frequenz, das heißt, die Frequenz wird verschoben, zum anderen ändert sich aufgrund der Entfernung die Signalbreite. Aus der Signalveränderung kann nachfolgend seitens der dem Chirp-Empfangssignal 23 zugeordneten Auswerteelektronik 17 die konkrete, vollständige Zielvermessung und Ermittlung der Eingangsparameter für die Feuerleitrechner erfolgen. Insbesondere wird hierbei einerseits eine Geschwindigkeitsinformation bezüglich des erfassten Objekts, zum anderen seine Entfernung bestimmt. Da insgesamt vier separate Empfangssignale über die vier Empfängerantennen erfasst werden, kann aus den jeweiligen Laufzeitunterschieden, resultierend aus den verschiedenen Antennenpositionen, auch der Azimut- und Orbitalwinkel des Objekts relativ zur Radarvorrichtung bestimmt werden.

Demgegenüber wird aus dem Festfrequenz-Empfangssignal 24, das sich ebenfalls reflexionsbedingt verglichen zum Sendesignal 22 geändert hat, nur aufgrund des Doppler-Effekts eine Geschwindigkeitsinformation über die Auswerteelektronik 16 ermittelt. In jedem Fall handelt es sich hierbei aber um eine Information, die auch anhand des Chirp-Empfangssignals 23 ermittelt wird, so dass gestützt auf diese Geschwindigkeitsinformation eine Verifizierung der Chirp-Empfangssignalauswertung erfolgen kann, worauf nachfolgend noch eingegangen wird.

Je nachdem, ob nun Chirp-Empfangssignale 23 oder Festfrequenz-Empfangssignale 24 erfasst werden, werden diese den unterschiedlichen, zugeordneten Analog-Digital-Wandlern 14 (denen noch entsprechende Mehrkanalfilter zugeordnet sind, wenngleich nicht näher gezeigt) gegeben. Die Chirp-Empfangssignale 23 werden dem Analog-Digital-Wandler 15 gegeben, mithin also dem unteren Signalverarbeitungszweig zugeführt, während die Festfrequenz-Empfangssignale 24 dem Analog-Digital-Wandler 14 und damit dem oberen Signalverarbeitungszweig gegeben werden.

Die gefilterten und digitalisieren Empfangssignale werden sodann in der jeweils zugeordneten Auswerteelektronik 16 bzw. 17 über die jeweiligen, empfangssignalspezifisch programmierten FPGA's 18, 19 ausgewertet. Diese Auswertekomponenten der jeweiligen Auswerteelektroniken 16, 17 sind bevorzugt unterschiedlichen Typs oder zumindest hinsichtlich der Signalauswertung unterschiedlich programmiert, um komponentenimmanente Fehler zu vermeiden.

Seitens des FPGA's 19 werden die Chirp-Empfangssignale ausgewertet und aus ihnen die entsprechenden, die relevanten Informationen enthaltenden Auswertesignale erzeugt. Diese Informationen umfassen wie ausgeführt zum einen eine Geschwindigkeitsinformation, zum anderen eine Entfernungsinformation wie auch entsprechende Winkelinformationen betreffend das erfasste Objekt. Grundsätzlich ergibt sich also aus diesen Auswertesignalen, dass ein Objekt erfasst wurde, dass mithin also eine Bedrohungslage gegeben ist, die eine Reaktion über den Feuerleitrechner erfordert, mithin also eine Gegenmaßnahme in Form des Abschusses einer Verteidigungsgranate. Um eine hohe Systemsicherheit zu gewährleisten wird nun dieses ausgewertete Ergebnis verifiziert. Dies geschieht anhand der zeitlich eng nach dem Chirp-Empfangssignal 23 erfassten Festfrequenz-Empfangssignalen 24. Denn wie beschrieben wird nach einem Chirp-Puls 21 sofort ein Festfrequenz-Puls 22 gesendet. Mithin liegen also in kürzester Zeit auch entsprechende Festfrequenz-Empfangssignale 24 vor. Diese werden nun über den Analog-Digital-Wandler der Auswerteelektronik 17 und dem dortigen, signalspezifisch programmierten FPGA 18 gegeben. Dieses wertet die Signale aus und erzeugt ein Auswertesignal mit einer Geschwindigkeitsinformation, die als solche aus dem Festfrequenz-Empfangssignal 24 ermittelt werden kann.

Dieses Auswertesignal mit der Geschwindigkeitsinformation wird nun der Auswerteelektronik 17 gegeben. Diese weist eine Vergleichs- oder Verifizierungseinrichtung 20 auf, die das vom dortigen FPGA 19 ermittelte Ausgangssignal, das wie beschrieben ebenfalls eine Geschwindigkeitsinformation enthält, mit dem Auswertesignal, also der Geschwindigkeitsinformation des FPGA's 18 vergleicht. Stimmt die im Auswertesignal des FPGA's 19 enthaltende Geschwindigkeitsinformation mit der vom FPGA 18 ermittelten Geschwindigkeitsinformation innerhalb eines gewissen Toleranzbereichs überein, so wird hierüber sichergestellt und verifiziert, dass die Zielerfassung und die Erfassung der Zielparameter korrekt ist. Dies ist die wesentliche Basis dafür, dass sodann über die Auswerteelektronik 17 die ermittelten Zielparameter als Eingangsparameter an den Feuerleitrechner gegeben werden können, zusammen mit einem Schussfreigabesignal, das quasi das Verifizierungssignal ist, und bestätigt, dass eine erfolgreiche Verifizierung gegeben ist. Die Funktionalität der Vergleichs- oder Verifizierungseinrichtung 20 kann alternativ auch in das FPGA 19 implementiert sein.

Zusätzlich kann jede Auswertelektronik 16, 17 respektive das jeweilige FPGA 18, 19 eine kontinuierliche Statusprüfung vornehmen, mithin also auch Statussignale erzeugen, die den jeweiligen Funktionsstatus beschreiben. Dies ermöglicht es, jedweden Funktionsfehler, der aufgrund eines Hardware-Fehlers, beispielsweise eines Leitungsschadens, einer Überhitzung etc. oder aufgrund eines Software-Fehlers beispielsweise innerhalb der FPGA's auftreten kann, zu erfassen und zu kommunizieren. Die Auswerteelektronik 16 gibt das entsprechende Statussignal an die Auswerteelektronik 17, die innerhalb der Vergleichs- und Verifizierungseinrichtung 20 auch diese beiden Statussignale vergleicht. Ergibt sich hierbei, dass ein Statussignal eine Fehlfunktion anzeigt, so wird automatisch eine Übertragung etwaiger erfasster Zielparameter an den Feuerleitrechner gesperrt und gegebenenfalls ein Fehlfunktionssignal an den Feuerleitrechner gegeben. Über den Vergleich der Statussignale ist folglich eine weitere Sicherheitsstufe implementiert.

Insgesamt bietet die erfindungsgemäße Radarvorrichtung die Möglichkeit einer hochsicheren Objekt- oder Zielerfassung. Denn ein Ziel gilt nur dann als gesichert erfasst, wenn der Vergleich der unterschiedlich aufgenommenen und unterschiedlich prozessierten respektive erzeugten Auswertesignale eine Übereinstimmung innerhalb der vergleichbaren Informationsgehalte zeigt. Dann und nur dann ist überhaupt die Übertragung der Objekt- oder Zielerfassungsparameter möglich. Ergibt der Vergleich keine Übereinstimmung, so erfolgt keine Datenübertragung und zwangsläufig keine Schussfreigabe. Aufgrund der abwechselnden Gabe des Chirp-Pulses 21 und des Festfrequenz-Pulses 22 mit hoher Wiederholfrequenz kann eine erneute Zielerfassung nebst Verifizierung sofort wieder vorgenommen werden, so dass trotz hoher Annäherungsgeschwindigkeit eines Objekts aufgrund der hohen Traktfrequenz der Radarvorrichtung eine Objekterfassung möglich ist.

Zusammenfassend ist zum Prinzip der Erfindung zu bemerken, dass beide Auswerteeinheiten, also die Chirp-Puls-Auswerteeinheit und die Festfrequenz-Puls-Auswerteeinheit, eine Verifikation der Bedrohung durchführen. Da die Signalform, das Radarprinzip sowie die Auswerteeinheiten selbst sich unterscheiden, wird die Verifikation der Bedrohung auf zwei mehr oder weniger getrennten Wegen durchgeführt. Nur wenn diese beiden unabhängigen Systeme zum selben Ergebnis (verifizierte Bedrohung) kommen, wird die Zielbekämpfung freigegeben. Die Erfindung ist damit also nicht auf eine Verifikation der Zielgeschwindigkeit beschränkt. Sollte die Geschwindigkeit alleine zur Zielverifikation nicht ausreichen, könnte die Festfrequenzauswertung derart erweitert werden, dass weitere Zielparameter verfügbar sind. Die Zielverifikation beschränkt sich nicht auf den Vergleich von Chirpsignal und Festfrequenzsignal, vielmehr werden mehrere aufeinander folgende Pulse ausgewertet und bewertet. Die Verifikation kann auch mittels Spurbildung durchgeführt werden.

## Patentansprüche

1. Radarvorrichtung, umfassend ein Sendemodul (8), wenigstens ein Empfangsmodul(11) sowie eine dem Empfangsmodul (11) nachgeschaltete Auswerteelektronik (16, 17),
wobei über das Sendemodul (8) in einer vorbestimmten Sendeabfolge Chirp-Pulse (21) und Festfrequenz-Pulse (22) abgebbar sind, **dadurch gekennzeichnet, dass** zwei separate, die von dem Empfangsmodul (11) empfangenen pulsspezifischen Empfangssignale (23, 24) auswertende Auswerteelektroniken (16, 17) vorgesehen sind, die separate pulsspezifische Auswertesignale erzeugen,
wobei die Gabe der Festfrequenz-Pulse (22) in Abhängigkeit von der Auswertung eines zuvor erfassten Chirp-Empfangssignals (23) erfolgt.

2. Radarvorrichtung nach Anspruch 1,
wobei die zwei separaten Auswerteelektroniken (16, 17) eingerichtet sind, zumindest teilweise vom Informationsinhalt her vergleichbare Auswertesignale zu erzeugen.

3. Radarvorrichtung nach Anspruch 2,
wobei als vom Informationsinhalt her vergleichbare Auswertesignale jeweils ein Geschwindigkeitsinformationssignal ermittelbar ist.

4. Radarvorrichtung nach einem der vorangehenden Ansprüche,
wobei seitens der separaten Auswerteelektroniken (16, 17) zusätzliche, den eigenen Funktionsstatus anzeigende Statussignale erzeugbar sind.

5. Radarvorrichtung nach einem der vorangehenden Ansprüche,
wobei die von der die Festfrequenz-Puls-Empfangssignale (24) verarbeitenden Auswerteelektronik (16) erzeugten Auswertesignale und gegebenenfalls Statussignale an die andere Auswerteelektronik (17) zu Vergleichszwecken gegeben werden.

6. Radarvorrichtung nach einem der vorangehenden Ansprüche,
wobei die Chirp-Pulse (21) und die Festfrequenz-Pulse (22) abwechselnd gebbar sind.

7. Radarvorrichtung nach einem der vorangehenden Ansprüche,
wobei die beiden separaten Auswerteelektroniken (16, 17) zumindest teilweise aus in der Art und/oder im Typ und/oder der Arbeitsweise unterschiedlichen Elektronikkomponenten aufgebaut sind.

8. Radarvorrichtung nach einem der vorangehenden Ansprüche,
wobei die separaten Auswerteelektroniken (16, 17) FPGA's (18, 19) umfassen.

9. Radarvorrichtung nach einem der vorangehenden Ansprüche,
wobei mehrere, insbesondere vier Empfangsantennen (12) zur Lieferung von simultanen, jedoch separaten Empfangssignalen (23, 24), die simultan von den jeweiligen Auswerteelektroniken (16, 17) verarbeitbar sind, vorgesehen sind.

## Claims

1. Radar device comprising a transmit module (8), at least one receive module (11) and an electronic analysis unit (16, 17) connected to the output of the receive module (11),
wherein chirp pulses (21) and fixed-frequency pulses (22) can be emitted by means of the transmit module (8) in a predetermined transmit sequence, **characterized in that** two separate electronic analysis units (16, 17) are provided, which analyse the pulse-specific receive signals (23, 24) received by the receive module (11) and generate separate pulse-specific analysis signals, wherein the fixed-frequency pulses (22) are transmitted according to the analysis of a previously detected chirp receive signal (23).

2. Radar device according to Claim 1,
wherein
the two separate electronic analysis units (16, 17) are configured to generate analysis signals that are at least partially comparable in terms of the information content.

3. Radar device according to Claim 2,
wherein
a velocity-information signal can in each case be determined as the analysis signals that are comparable in terms of the information content.

4. Radar device according to any of the previous claims,
wherein the separate electronic analysis units (16, 17) can generate additional status signals indicating the operating status of the unit concerned.

5. Radar device according to any of the previous claims,
wherein the analysis signals generated by the electronic analysis unit (16) that processes the fixed-frequency pulse receive signals (24), and if applicable status signals, are passed for comparison purposes to the other electronic analysis unit (17).

6. Radar device according to any of the previous claims,
wherein the chirp pulses (21) and the fixed-frequency pulses (22) can be transmitted alternately.

7. Radar device according to any of the previous claims,
wherein the two separate electronic analysis units (16, 17) are constructed at least partially from electronic components that differ in terms of form and/or type and/or mode of operation.

8. Radar device according to any of the previous claims,
wherein the separate electronic analysis units (16, 17) comprise FPGAs (18, 19).

9. Radar device according to any of the previous claims,
wherein a plurality of receive antennas (12), in particular four receive antennas, are provided for supplying simultaneous but separate receive signals (23, 24), which can be processed simultaneously by the respective electronic analysis units (16, 17).

## Revendications

1. Dispositif radar, comprenant un module d'émission (8), au moins un module de réception (11) ainsi qu'une électronique d'interprétation (16, 17) branchée à la suite du module de réception (11),
des impulsions comprimées (21) et des impulsions à fréquence fixe (22) pouvant être délivrées par le biais du module d'émission (8) dans une séquence d'émission prédéfinie,
**caractérisé en ce qu'**il existe deux électroniques d'interprétation (16, 17) distinctes qui interprètent les signaux de réception (23, 24) spécifiques aux impulsions reçus par le module de réception (11) et qui génèrent des signaux d'interprétation spécifiques aux impulsions distincts,
la délivrance des impulsions à fréquence fixe (22) s'effectuant en fonction de l'interprétation d'un signal reçu à compression (23) capté précédemment.

2. Dispositif radar selon la revendication 1, avec lequel les deux électroniques d'interprétation (16, 17) distinctes sont conçues pour générer des signaux d'interprétation comparables au moins en partie du point de vue de la teneur en informations.

3. Dispositif radar selon la revendication 2, avec lequel un signal d'information de vitesse peut respectivement être déterminé en tant que signaux d'interprétation comparables du point de vue de la teneur en informations.

4. Dispositif radar selon l'une des revendications précédentes, avec lequel des signaux d'état supplémentaires, indiquant l'état fonctionnel propre, peuvent être générés du côté des électroniques d'interprétation (16, 17) distinctes.

5. Dispositif radar selon l'une des revendications précédentes, avec lequel les signaux d'interprétation générés par l'électronique d'interprétation (16) qui traite les signaux reçus d'impulsions à fréquence fixe (24) et les éventuels signaux d'état sont délivrés à l'autre électronique d'interprétation (17) à des fins de comparaison.

6. Dispositif radar selon l'une des revendications précédentes, avec lequel les impulsions comprimées (21) et les impulsions à fréquence fixe (22) peuvent être délivrées en alternance.

7. Dispositif radar selon l'une des revendications précédentes, avec lequel les deux électroniques d'interprétation (16, 17) distinctes sont constituées au moins en partie de composants électroniques différents de par leur nature et/ou leur modèle et/ou leur mode de fonctionnement.

8. Dispositif radar selon l'une des revendications précédentes, avec lequel les électroniques d'interprétation (16, 17) distinctes comprennent des FPGA (18, 19).

9. Dispositif radar selon l'une des revendications précédentes, avec lequel sont prévues plusieurs, notamment quatre antennes de réception (12) destinées à délivrer des signaux reçus (23, 24) simultanés, mais distincts, lesquels peuvent être traités simultanément par les électroniques d'interprétation (16, 17) respectives.
